# EUROPÄISCHE PATENTSCHRIFT

(11) **EP 0 414 759 B1**
(45) Veröffentlichungstag und Bekanntmachung des Hinweises auf die Patenterteilung: **11.08.1993**
(21) Anmeldenummer: 89905638.6
(22) Anmeldetag: 17.05.1989
(51) Int. Cl.: H05B 7/06, F27D 11/08

(54) **VERSCHLEISSARME ELEKTRODE IN GLEICHSTROMLICHTBOGENOFEN**
WEAR-RESISTANT ELECTRODE FOR DIRECT CURRENT ARC FURNACES
ELECTRODE A USURE REDUITE POUR FOURS A CHAUFFAGE DIRECT PAR ARC DE COURANT CONTINU

(30) Priorität: 18.05.1988 DE 3817381
(43) Veröffentlichungstag der Anmeldung: 06.03.1991
(73) Patentinhaber: MANNESMANN Aktiengesellschaft, 40027 Düsseldorf (DE)
(72) Erfinder: FEUERSTACKE, Ewald, D-4270 Dorsten (DE)
(74) Vertreter: Meissner, Peter E., Dipl.-Ing.
(86) Internationale Anmeldenummer: DE8900317
(87) Internationale Veröffentlichungsnummer: WO8911774

(56) Entgegenhaltungen:
- EP-A- 124 490
- EP-A- 150 483
- EP-A- 150 484
- EP-A- 151 415
- EP-A- 255 793
- DE-A- 3 414 392
- DE-C- 298 847
- FR-A- 2 280 286
- GB-A- 2 046 560
- GB-A- 2 072 470
- GB-A- 2 143 110
- US-A- 4 766 598

## Beschreibung

Die Erfindung betrifft ein Verfahren und eine Vorrichtung zum Einschmelzen von metallischen Materialien in einem mit Gleichstrom betriebenen Lichtbogenofen nach den Überbegriffen der Ansprüche 1 und 2.

Die Stromzuführung zu den Gleichstromlichtbogenöfen wird durch mit der Energiestation in Verbindung stehenden Elektroden bewirkt, die üblicherweise an Tragarmen angeordnet sind. Die Stromrückführung erfolgt zur gleichen Energiestation.

Das aus dem relativ hohen elektrischen Strom resultierende magnetische Feld der Stromzu- und -rückführungen verschiebt das elektromagnetische Feld in die entgegengesetzte Richtung. Folge dieses sogenannten elektromagnetischen Windes ist die Ablenkung des Lichtbogens aus dem Zentrum mit dem Nachteil hoher Errosionswirkung des Lichtbogens an den Wänden des Ofengefäßes.

Die bei Betrieb des Lichtbogenofens auf das Schmelzbad wirkenden Kräfte sind senkrecht zu den elektromagnetischen Feldlinien gerichtet und bewirken eine Badbewegung, die von außen gegen die Achse der in der Bad ragenden Elektrode gerichtet ist. Die Schmelzbadströmung wirkt dabei in negativer Weise unmittelbar auf die Elektrodenstirnfläche ein.

Aus DE-PS-32 32 551 ist bekannt, der negativen in das Ofengefäß hineinragenden Electrode zwei symmetrisch zur Kathode angeordnete positive Elektroden vorzusehen, die mit der Elektrolytschlacke in Verbindung stehen. Nachteil dieser Anordnung ist der bei mehr als zwei positiven Elektroden nicht geschlossene Anodenring, der ein Ablenken des Lichtbogens noch zuläßt. Nachteilig wirkt sich aus der hohe Verschleiß der in die Schlacke eintauchenden positiven Elektroden aus, wobei das abbrennende Material die Schmelze verunreinigt.

Aus der EP-A-0 151 415 ist ein Verfahren zum Einschmelzen von metallischen Materialien in einem mit Gleichstrom betriebenen Lichtbogenofen bekannt, der ein einen metallischen Mantel und eine Feuerfestauskleidung aufweisendes topfförmiges Gefäß besitzt. Koaxial zur vertikalen Gefäßachse ragt in das Gefäß eine negative Elektrode und im Bereich des Gefäßbodens sind positive Elektroden vorgesehen. Die Stromführung zu diesen positiven Elektroden erfolgt über elektrisch leitende Schichten in der Feuerfestauskleidung, d.h. es wird ein direkter elektrischer Kontakt zwischen der Schmelze und den positiven Elektroden hergestellt. Chemische Aggressivitäten der Schmelze wirken sich daher direkt auf diese leitende Verbindung aus.

Aus der EP-A-01 50 483 ist ein elektrischer Ofen bekannt, bei dem eine positive Elektrode vorgesehen ist, die außermittig im Boden des Ofengefäßes angeordnet ist. Die Stromführenden Teile der Bohrelektrode haben beim Einschmelzprozeß Kontakt mit dem flüssigen Schmelzgut. Nachteil der aus dieser Schrift bekannten Anordnung der positiven Elektroden ist die hohe Konzentration der elektrischen Energie auf der geringen Oberfläche der positiven Elektrode mit der Folge hoher Aufzehrung der Elektrode.

Aus der EP-A-01 24 490 ist ein Gleichstromofen mit einer metallischen Bodenelektrode bekannt, die mit einem elektrischen leitenden Granulat bedeckt ist und die zum Gefäßmantel elektrisch isoliert ist. Nachteil der aus dieser Schrift bekannten positiven Elektroden ist, daß ausschließlich Einfluß auf die Wechselbarkeit der Verschleißelemente genommen wird, ohne aktiv die Verschleißrate zu mindern.

Aufgabe der Erfindung ist es, einen Gleichstromlichtbogenofen zu schaffen, der bei einfachem Aufbau und bei unveränderter Schmelzleistung einen minderen Verschleiß der Feuerfestauskleidung des Ofens und der positiven Elektroden aufweist.

Die Erfindung löst diese Aufgabe durch die in den Ansprüchen 1 und 2 angegebenen kennzeichnenden Merkmale.

Die Erfindung macht sich dabei die Eigenschaft solcher keramischer Isolierstoffe zu Nutze, deren spezifischer elektrischer Widerstand bei hohen Temperaturen sinkt (Hütte, 5. Auflage, Tafel 110).

Erfindungsgemäß wird die positive Elektrode zwischen dem Gefäßmantel und der Feuerfestauskleidung angeordnet. Damit ist die positive Elektrode nicht mehr der Schmelze und damit nicht mehr der chemischen Aggressivität, der thermischen wie auch der erosiven Belastung ausgesetzt. Für den Anwender ergibt sich ein relativ großer Freiheitsgrad bei der Auswahl der Materialien der positiven Elektrode.

Bei Betrieb der Pfanne ist die vor der positiven Elektrode angeordnete Feuerfestauskleidung durch den Kontakt der Schmelze hohen Temperaturen ausgesetzt, so daß ein geringer spezifischer elektrischer Widerstand. vorliegt. Zum Starten des Schmelzprozesses ist die Feuerfestauskleidung im Bereich der positiven Elektrode zu erwärmen, um den spezifischen elektrischen Widerstand zu mindern. Dieses Vorwärmen des Ofengefäßes kann gleichzeitig zur Minderung der Thermo-Schockwirkung bei Einsatz abgekühlter Gefäße benutzt werden.

Erfindungsgemäß steht die positive Elektrode in direkten Kontakt zum Gefäßmantel. Durch diese Anordnung ergibt sich der Vorteil, daß die Stromrückführung an beliebiger Stelle eines metallischen Teil des Gefäßes angreifen kann. Bei Pfannenöfen bietet sich dabei die Aufhängung oder der Gefäßboden an. Im letzteren Fall sind in den jeweiligen Behandlungsstationen entsprechende Kontaktplatten vorzusehen.

Nach der Erfindung ist die positive Elektrode ringförmig ausgestaltet. Zur Zentrierung des Lichtbogens zwischen der negativen Elektroden und der Schmelze sind folgende Maßnahmen vorgesehen: Entgegen der Blaswirkung des elektromagnetischen Windes wird die Elektrode in ihrer Massenwerteilung ausgestaltet. Dies wird entweder durch Änderung des Querschnittes der positiven Elektrode oder durch Unterbrechungen des Elektrodenringes bewirkt. Die größere Elektrodenmasse ist dabei auf der Energieversorgungs- und -zuführungsseite des Ofens angeordnet. Durch diese Maßnahme wird der Lichtbogen an seiner Auslenkung gehindert. Die Folge des zentrisch brennenden Lichtbogens ist eine gleichmäßige Belastung der Feuerfestauskleidung.

Zwischen dem metallischen Gefäßmantel und der Feuerfestauskliedung ist erfindungsgemäß eine elektrische Isolierschicht vorgesehen. Durch die Isolierschicht wird der über den metallischen Gefäßmantel fließende elektrische Strom gezwungen, ausschließlich von der positiven Elektrode zu den Kontaktbackan zu fließen. Damit werben Fehlströme verhindert, die zu örtlichen Überhitzungen der Feuerfestauskleidung führen könnten.

Als Isolierung wird ein Material vorgeschlagen, das neben der fehlenden elektrischen Leitfähigkeit eine ausreichende thermische Leitfähigkeit aufweist. Als Werkstoffe kommen Glimmer, Zirkoniumdioxide oder ähnliche Stoffe infrage. Die thermische Leitfähigkeit der Isolierschicht läßt das erforderliche Maß der Wärmeabfuhr zu, ohne den Nachteil der Möglichkeit von Fehlströmen zu eröffnen. Die Isolierschicht ist dabei über den Rand des Ofengefäßes geführt, um zu verhindern, daß Fehlströme durch über den Gefäßrand fließendes Material auftreten.

Beispiele der vorliegenden Erfindung werden nachfolgend beschrieben. Es zeigt:
- Fig. 1: einen Schnitt durch das Ofengefäß,
- Fig. 2: einen positiven Elektrodenring mit veränderlichem Querschnitt und
- Fig. 3: einen Elektrodenring mit Unterbrechungen.

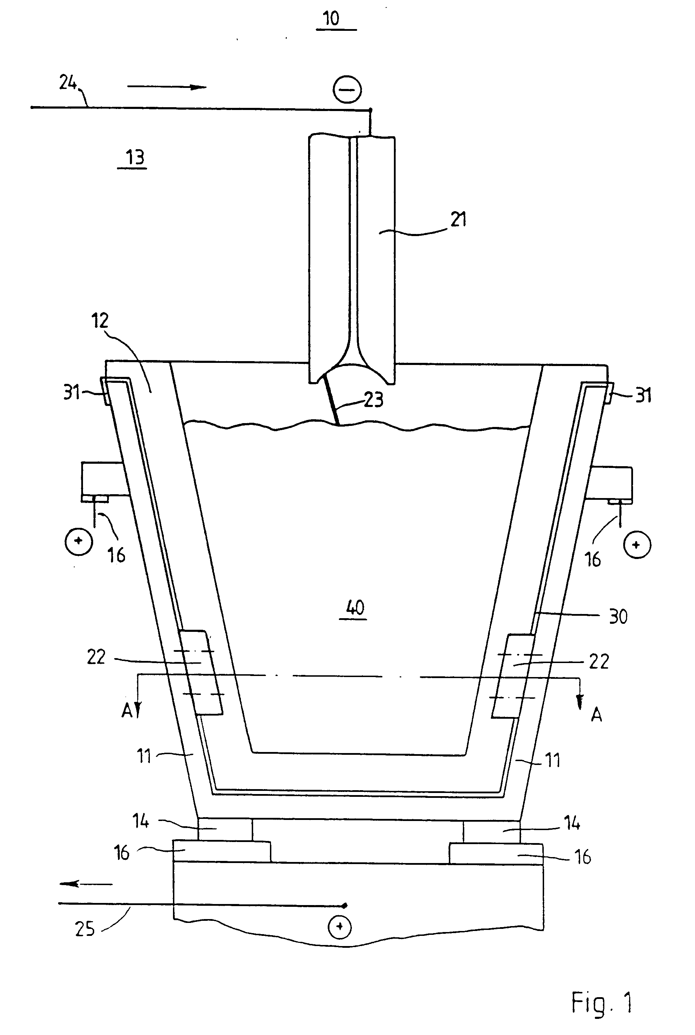

Die Figur 1 zeigt den Schnitt durch den Pfannenofen 10 mit der negativen Elektrode 21, die in das mit Schmelze 40 gefüllte topfförmige Gefäß 13 hineinragt. Das Gefäß 13 weist einen metallischen Gefäßmantel 11, eine Feuerfestauskleidung 12 und zwischen dem Gefäßmantel und der Feuerfestkleidung eine Isolierschicht 30 auf. Die Isolierschicht 30 ist elektrisch nicht leitend. Im oberen Bereich der Pfanne wird die Isolierschicht 30 über den oberen Mantelrand 31 des Ofens geführt.

Zwischen der negativen Elektrode 21 und dem Schmelzbad 40 brennt der Lichtbogen 23. Der elektrische Strom wird über die Stromzuführung 24 der negativen Elektrode 21 zugeführt und über die Stromabfuhr 25 von den positiven Elektroden 22 wieder abgeführt. Die positiven Elektroden 22 werden dabei aus dem elektrischen Strom leitenden Feuerfestmaterial 22 gebildet, das zwischen Gefäßmantel 11 und Feuerfestkleidung 12 angeordnet ist. Die Rückführung des elektrischen Stroms erfolgt von der positiven Elektrode 22 über dem metallischen Gefäßmantel 11. Am Ofenmantel 11 sind nach außen weisende Elemente 16 zur Stromabführung vorgesehen. In einer Ausführungsform sind diese nach außen weisenden Elemente 16 als Gefäßfüße 14 ausgebildet. Die positive Elektrode 22 ist ringförmig ausgebildet und oberhalb des Gefäßbodens angeordnet.

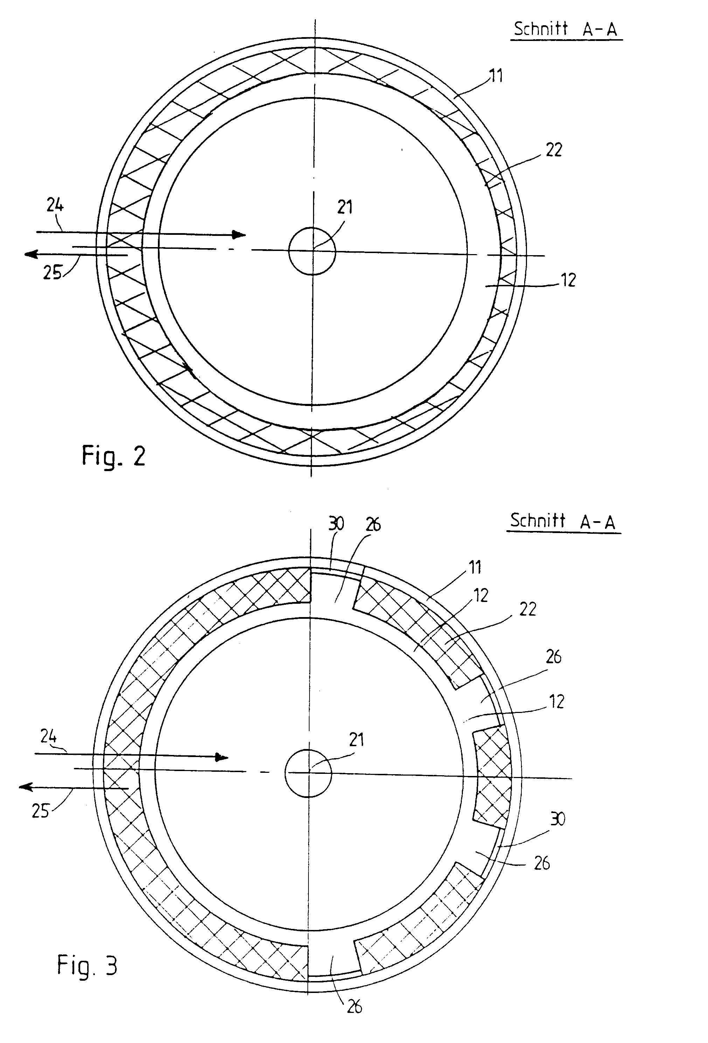

Die Figur 2 zeigt einen Schnitt A-A durch das Gefäß. Die Stromzufuhr 24 sowie die Stromabfuhr 25 sind schematisch dargestellt. Zwischen dem Ofengefäßmantel 11 und dem Feuerfestmaterial 12 ist die ringförmige Elektrode 22 dargestellt. Der Ring 22 weist einen unterschiedlichen Querschnitt auf, wobei der größere Querschnitt auf der Seite des Ofens angeordnet ist, auf der der Strom zu- und abgeführt wird. Im Zentrum des Ofens ist die negative Elektrode 21 dargestellt.

Die Figur 3 zeigt die gleichen Elemente wie Figur 2 mit einen Ring 22, der Unterbrechungen 26 aufweist, die mit Feuerfestmaterial 12 ausgekleidet und durch die Isolierschicht 30 vom Gefäßmantel 11 getrennt sind. Außerhalb der Unterbrechungen 26 weist der Ring 22 einen gleichmäßigen Querschnitt auf.

## Patentansprüche

1. Verfahren zum Einschmelzen von metallischen Materialien in einem mit Gleichstrom betriebenen Lichtbogenofen, der ein einen metallischen Mantel und eine Feuerfestauskleidung aufweisendes topfförmiges Gefäß, eine koaxial zur vertikalen Gefäßachse in das Gefäß hineinragende negative Elektrode und im Bereich des Gefäßbodens positive Elektrode besitzt,
dadurch gekennzeichnet,
daß die Feuerfestauskleidung (12) vor der Beschicktung aufgeheizt wird und daß zum Einschmelzen des metallischen Materials ein Lichtbogen (23) zwischen dem Schmelzgut (40) und der negativen Elektrode (21) ausgebildet wird und daß die Rückführung (25) des Gleichstromes über das im Bereich der positiven Elektrode (22) angeordnete Feuerfestmaterial der Auskleidung, die positive Elektrode (22) sowie den metallischen Gefäßmantel (11) durchgeführt wird.

2. Gleichstromlichtbogenofen zur Durchführung des Verfahrens nach Anspruch 1, mit einem einen metallischen Mantel und eine Feuerfestauskleidung aufweisenden topfförmigen Gefäß, koaxial zur vertikalen Gefäßachse in das Gefäß ragende negative Elektrode und im Bereich des Gefäßbodens positive Elektrode,
dadurch gekennzeichnet,
daß zwischen Gefäßmantel (11) und Feuerfestauskleidung (12) ein den elektrischen Strom leitendes Feuerfestmaterial (22) vorgesehen ist, das als positive Elektrode dient, und daß zwischen Gefäßmantel (11) und Feuerfestauskleidung (12) außerhalb der positiven Elektrode (22) eine Isolierschicht (30) vorgesehen ist, die den elektrischen Strom nicht leitet.

3. Gleichstromlichtbogenofen nach Anspruch 2,
dadurch gekennzeichnet,
daß die positive Elektrode (22) ringförmig ausgebildet ist.

4. Gleichstromlichtbogenofen nach Anspruch 3,
dadurch gekennzeichnet,
daß das Material der positiven Elektrode (22) Graphit ist.

5. Gleichstromlichtbogenofen nach Anspruch 3 oder 4,
dadurch gekennzeichnet,
daß der die positive Elektrode (22) bildende Ring oberhalb des Gefäßbodens angeordnet ist.

6. Gleichstromlichtbogenofen nach Anspruch 5,
dadurch gekennzeichnet,
daß der die positive Electrode (22) bildende Ring unterschiedliche Querschnitte aufweist.

7. Gleichstromlichtbogenofen nach Anspruch 6,
dadurch gekennzeichnet,
daß der größere Querschnitt des Ringes (22) auf dem Seite des Ofens (13) angeordnet ist, auf der der Strom zu- und abgeführt (24, 25) wird.

8. Gleichstromlichtbogenofen nach Anspruch 5,
dadurch gekennzeichnet,
daß der Ring (22) Unterbrechungen (26) aufweist, die mit Feuerfestmaterial (12) ausgekleidet und durch die Isolierschicht (30) vom Gefäßmantel (11) getrennt sind.

9. Gleichstromlichtbogenofen nach Anspruch 8,
dadurch gekennzeichnet,
daß die Unterbrechungen (26) auf der Seite des Ofens angeordnet sind, die der Stromzu- und -abführung (24, 25) abgewandt sind.

10. Gleichstromlichtbogenofen nach Anspruch 2,
dadurch gekennzeichnet,
daß die elektrische Isolierschicht (30) thermische Leitfähigkeit aufweist.

11. Gleichstromlichtbogenofen nach Anspruch 10.
dadurch gekennzeichnet,
daß die elektrisch nicht leitende, aber thermisch leitende Isolierschicht (30) Glimmer ist.

12. Gleichstromlichtbogenofen nach Anspruch 10,
dadurch gekennzeichnet,
daß die Isolierschicht (30) über den oberen Mantelrand (31) des Ofens geführt ist.

13. Gleichstromlichtbogenofen nach einem der vorhergenannten Ansprüche,
dadurch gekennzeichent,
daß an dem Ofenmantel nach außen weisende Elemente (16) zur Stromabführung vorgesehen sind.

14. Gleichstromlichtbogenofen nach Anspruch 13,
dadurch gekennzeichnet,
daß diese Stromabführungselemente (16) im Bereich des Bodens des Ofengefäßes (13) angeordnet sind.

## Claims

1. A process for melting down metallic materials in an arc furnace which is operated by direct current, which furnace has a pot-shaped vessel having a metallic casing and a refractory lining, a negative electrode projecting into the vessel coaxially to the vertical axis of the vessel and a positive electrode in the region of the bottom of the vessel,
characterised in that the refractory lining (12) is heated up before charging and that to melt down the metallic material an arc (23) is formed between the material being melted (40) and the negative electrode (21) and that the direct current is fed back (25) via the refractory material of the cladding located in the region of the positive electrode (22), the positive electrode (22) and the metallic casing (11) of the vessel.

2. A direct-current arc furnace for performing the process according to Claim 1, with a pot-shaped vessel having a metallic casing and a refractory lining, a negative electrode projecting into the vessel coaxially to the vertical axis of the vessel and a positive electrode in the region of the bottom of the vessel, characterised in that a refractory material (12) which conducts electric current is provided between the casing (11) of the vessel and the refractory lining (22), which material serves as a positive electrode, and that an insulating layer (30) is provided between the casing (11) of the vessel and the refractory lining (12) outside the positive electrode (22), which layer does not conduct electric current.

3. A direct-current arc furnace according to Claim 2, characterised in that the positive electrode (22) is annular.

4. A direct-current arc furnace according to Claim 3, characterised in that the material of the positive electrode (22) is graphite.

5. An direct-current arc furnace according to Claim 3 or 4, characterised in that the ring forming the positive electrode (22) is located above the bottom of the vessel.

6. A direct-current arc furnace according to Claim 5, characterised in that the ring forming the positive electrode (22) has varying cross-sections.

7. A direct-current arc furnace according to Claim 6, characterised in that the larger cross-section of the ring (22) is located on the side of the furnace (13) on which the current is supplied and removed (24, 25).

8. A direct-current arc furnace according to Claim 5, characterised in that the ring (22) has holes (26) which are lined with refractory material (12) and are separated from the casing (11) of the vessel by the insulating layer (30).

9. A direct-current arc furnace according to Claim 8, characterised in that the holes (26) are located on the side of the furnace which is remote from the supply and removal of current (24, 25).

10. A direct-current arc furnace according to Claim 2, characterised in that the electric insulating layer (30) has thermal conductivity.

11. A direct-current arc furnace according to Claim 10, characterised in that the electrically non-conductive but thermally conductive insulating layer (30) is mica.

12. A direct-current arc furnace according to Claim 10, characterised in that the insulating layer (30) passes above the upper edge (31) of the casing of the furnace.

13. A direct-current arc furnace according to one of the preceding Claims, characterised in that outward-pointing elements (16) are provided on the furnace casing for removing current.

14. A direct-current arc furnace according to Claim 13, characterised in that these current-removing elements (16) are located in the region of the base of the furnace vessel (13).

## Revendications

1. Procédé pour fondre des matières métalliques dans un four à arc à courant continu, qui possède un récipient en forme de creuset présentant une enveloppe métallique et une garniture intérieure réfractaire, une électrode négative pénétrant dans le récipient coaxialement à l'axe vertical du récipient, et une électrode positive dans la zone du fond du récipient,
caractérisé en ce que la garniture intérieure réfractaire (12) est chauffée avant le chargement, et en ce que, pour fondre la matière métallique, un arc (23) est formé entre la matière de fusion (40) et l'électrode négative (21), et en ce que le retour (25) du courant continu est effectué par la matière réfractaire, disposée dans la zone de l'électrode positive (22), de la garniture, l'électrode positive (22), ainsi que l'enveloppe métallique (11) du récipient.

2. Four à arc à courant continu pour la mise en oeuvre du procédé selon la revendication 1, comportant un récipient en forme de creuset présentant une enveloppe métallique et une garniture intérieure réfractaire, une électrode négative pénétrant dans le récipient coaxialement à l'axe vertical du récipient, et une électrode positive dans la zone du fond du récipient,
caractérisé en ce que, entre l'enveloppe (11) du récipient et la garniture intérieure réfractaire (12), est prévue une matière réfractaire (22) conduisant le courant électrique, qui sert d'électrode positive, et en ce que, entre l'enveloppe (11) du récipient et la garniture intérieure réfractaire (12), à l'extérieur de l'électrode positive (22), est prévue une couche d'isolation (30) qui ne conduit pas le courant électrique.

3. Four à arc à courant continu selon la revendication 2,
caractérisé en ce que l'électrode positive (22) présente une forme annulaire.

4. Four à arc à courant continu selon la revendication 3,
caractérisé en ce que la matière de l'électrode positive (22) est du graphite.

5. Four à arc à courant continu selon la revendication 3 ou 4,
caractérisé en ce que l'anneau formant l'électrode positive (22) est agencé au-dessus du fond du récipient.

6. Four à arc à courant continu selon la revendication 5,
caractérisé en ce que l'anneau formant l'électrode positive (22) présente différentes sections transversales.

7. Four à arc à courant continu selon la revendication 6,
caractérisé en ce que la plus grande section transversale de l'anneau (22) est prévue du côté du four (13) où est amené ou évacué le courant (24,25).

8. Four à arc à courant continu selon la revendication 5,
caractérisé en ce que l'anneau (22) présente des discontinuités (26) qui sont garnies de matière réfractaire (12) et sont séparées de l'enveloppe (11) du récipient par la couche d'isolation (30).

9. Four à arc à courant continu selon la revendication 8,
caractérisé en ce que les discontinuités (26) sont agencées sur le côté du four qui est opposé à l'amenée ou à l'évacuation du courant (24,25).

10. Four à arc à courant continu selon la revendication 2,
caractérisé en ce que la couche d'isolation électrique (30) présente une conductibilité thermique. .

11. Four à arc à courant continu selon la revendication 10,
caractérisé en ce que la couche d'isolation (30), électriquement non conductrice, mais thermiquement conductrice, est du mica.

12. Four à arc à courant continu selon la revendication 10,
caractérisé en ce que la couche d'isolation (30) est guidée au-dessus du bord supérieur (31) de l'enveloppe du four.

13. Four à arc à courant continu selon une des revendications précédentes,
caractérisé en ce que des éléments (16) orientés vers l'extérieur sont prévus sur l'enveloppe du four pour évacuer le courant.

14. Four à arc à courant continu selon la revendication 13,
caractérisé en ce que ces élément d'évacuation du courant (16) sont agencés dans la zone du fond du récipient (13) du four.
